# EUROPEAN PATENT APPLICATION

(11) **EP 4 797 398 A1**
(43) Date of publication of application: **26.08.2026**
(21) Application number: 26156770.5
(22) Date of filing: 06.02.2026
(51) Int. Cl.: H01M 50/15, H01M 50/209, H01M 50/342, H01M 50/375

(54) **BATTERY AND BATTERY PACK INCLUDING THE SAME**

(30) Priority: 20.02.2025 KR 20250022330
(71) Applicant: SAMSUNG SDI CO., LTD., Yongin-si, Gyeonggi-do 17084 (KR)
(72) Inventor: Baek, Soo Min, 16678 Suwon-si, Gyeonggi-do (KR); Lim, Hyun Young, 16678 Suwon-si, Gyeonggi-do (KR)
(74) Representative: Gulde & Partner

(57) **Abstract**

A battery includes an electrode assembly, a case accommodating the electrode assembly, the case including a vent hole, and a vent formed of a polymer material, the vent including
a body portion covering the vent hole, and a flange portion extending from the body portion toward a surface of the case, the flange portion being coupled to the case and including at least one protrusion protruding in a thickness direction of a portion of the case coupled to the flange portion.

## Description

### BACKGROUND

### 1. Field

The present disclosure relates to a battery and a battery pack including the same.

### 2. Description of the Related Art

Secondary batteries are batteries that can be (re)charged and discharged, unlike primary batteries that cannot be recharged. Low-capacity secondary batteries (hereinafter simply referred to as a "battery") may be used in small portable electronic devices such as smartphones, feature phones, laptop computers, digital cameras, and camcorders, and high-capacity batteries may be used as power sources for driving a motor, power storage batteries, and the like in hybrid vehicles, electric vehicles, and the like. Such batteries include electrodes including a positive electrode and/or a negative electrode, an electrode assembly including the electrodes, a case which accommodates the electrode assembly, an electrode terminal connected to the electrode assembly, etc.

As technology advances, high-capacity batteries are required. Accordingly, a plurality of batteries can be used by being electrically connected. For example, the battery can be applied to electronic devices in the form of a secondary battery module including a plurality of batteries, and/or a battery pack including a plurality of batteries modules. In some embodiments, the battery pack may be configured with a plurality of batteries. In this case, the electronic device is an electronic device requiring high output and/or high capacity and includes, for example, electric vehicles and the like.

### SUMMARY

The invention is defined by the appended claims. The description that follows is subject to this limitation. Any disclosure lying outside the scope of said claims is only intended for illustrative as well as comparative purposes.

According to an embodiment of the present disclosure, there is provided a battery including an electrode assembly, a case accommodating the electrode assembly and including a vent hole, and a vent formed of a polymer material and including a body portion covering the vent hole and a flange portion extending from the body portion toward a surface of the case and coupled to the case, wherein the flange portion has a protrusion protruding in a thickness direction of a portion of the case coupled to the flange portion.

According to one aspect of the embodiment, the protrusion may be inclined at a predetermined angle in a direction of the vent hole. For example, the predetermined angle may be in the range of 5 to 30°.

According to another aspect of the embodiment, one or more protrusions may be included.

According to still another aspect of the embodiment, the protrusion may include an outward protrusion protruding toward an outer surface of the case. Alternatively or in addition, the protrusion may further include an inward protrusion protruding toward an inner surface of the case.

According to yet another of the embodiment, the case may have a surface treatment layer that is acid-treated or laser-treated at an interface that comes into contact with the flange portion.

According to yet another aspect of the embodiment, the case may include a can in which the electrode assembly is disposed and a cap plate coupled to the can and covering an opening provided in the can, and the vent may be provided in the cap plate or the can.

According to yet another aspect of the embodiment, the polymer material may have a glass transition temperature in the range of 80 to 340°C.

According to yet another aspect of the embodiment, a height of the protrusion may be 1/10 to 1/3 of a thickness of the case. In addition or alternatively, a width of the protrusion may be 1/5 to 1 of a height of the protrusion.

According to yet another aspect of the embodiment, the vent may be coupled to the case by an insert injection molding method.

According to another embodiment of the present disclosure, there is provided a battery pack including a housing, and a plurality of batteries disposed inside the housing, wherein the battery includes an electrode assembly, a case accommodating the electrode assembly and including a vent hole, and a vent formed of a polymer material and including a body portion covering the vent hole and a flange portion extending from the body portion toward a surface of the case and coupled to the case, wherein the flange portion has a protrusion protruding in a thickness direction a portion of the case coupled to the flange portion.

### BRIEF DESCRIPTION OF THE DRAWINGS

Features will become apparent to those of skill in the art by describing in detail exemplary embodiments with reference to the attached drawings, in which:
FIG. 1 is a perspective view schematically illustrating a configuration of a battery pack according to an embodiment of the present disclosure;
FIG. 2 is a perspective view schematically illustrating an example of a configuration of a battery included in the battery pack of FIG. 1;
FIG. 3 is an exploded perspective view of the battery of FIG. 2;
FIG. 4 is a view schematically illustrating an example of a configuration of an electrode assembly included in the battery of FIG. 2;
FIG. 5 is a perspective view schematically illustrating another example of a configuration of a battery included in the battery pack of FIG. 1;
FIG. 6 is an exploded perspective view of the battery of FIG. 5;
FIG. 7 is an example of a cross-sectional view along line VII-VII in FIG. 3 or 6; and
FIG. 8 is another example of a cross-sectional view along line VII-VII in FIG. 3 or 6.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

Furthermore, when used herein, the terms "comprise," "include," "comprising," or "including" specify the presence of the mentioned shapes, numbers, steps, operations, members, elements, and/or groups thereof and are not intended to exclude the presence or addition of one or more other shapes, numbers, operations, members, elements, and/or groups thereof.

Although first, second, and the like are used to describe various components, the components are not limited by these terms. These terms are used only to distinguish one component from another, and unless otherwise specifically stated, it is to be understood that a first component may also be a second component.

Throughout the specification, unless otherwise specifically stated, each element may be singular or plural.

When an arbitrary configuration is placed "on (or under)" a component or "above (or below)" a component, it can mean not only that the arbitrary configuration is placed in contact with the top (or bottom) of the component, but also that other configurations can be interposed between the component and the arbitrary configuration placed on (or under) the component.

In addition, when a component is described as being "connected to" or "coupled to" another component, the components may be directly connected or coupled to each other, but it should be understood that other components may be "interposed" between each component, or each component may be "connected," "coupled," or "linked" through another component.

As used herein, the term "and/or" includes any and all combinations of one or more of the associated listed items. Further, the use of "may" when describing embodiments relates to "one or more embodiments." Expressions such as "one or more" and "at least one" before the list of elements modify the entire list of elements and do not modify individual elements in the list.

Throughout the specification, "A and/or B" means A, B, or A and B unless otherwise stated to the contrary. That is, "and/or" includes any or all combinations of a plurality of listed items. When "C to D" is stated, it means greater than or equal to C and less than or equal to D unless otherwise specifically stated.

When phrases such as "at least one of A, B, and C," "at least one of A, B, or C," "at least one selected from group of A, B, and C," or "at least one selected from A, B, and C" are used to specify a list of elements A, B, and C, the phrases may refer to any and all suitable combinations.

The term "use" may be considered synonymous with the term "utilize."

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be named a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the drawings. It will be understood that the spatially relative terms are intended to encompass different orientations of the device in use or operation in addition to the orientation depicted in the drawings. For example, when the elements or features in the drawings are inverted, an element described as "lower" or "below" "becomes "upper" or "above."

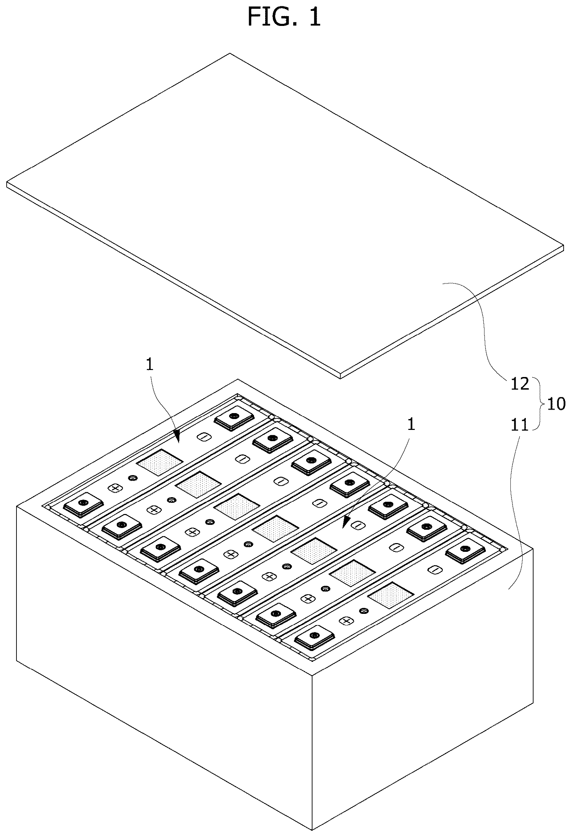

FIG. 1 is a perspective view schematically illustrating a configuration of a battery pack according to an embodiment of the present disclosure. Referring to FIG. 1, the battery pack may include a housing 10 and a battery 1.

The housing 10 may form an approximate exterior of the battery pack and provide a space in which a plurality of batteries 1 may be accommodated. The housing 10 may also function as a configuration that supports the plurality of batteries 1 and protects the plurality of batteries 1 from external impacts and foreign substances. The housing 10 may include a housing body 11 and a housing cover 12.

The housing body 11 may be configured to have the shape of a box with an empty interior and one open side. The housing body 11 may be open toward the one open side (e.g., upward based on FIG. 1). A cross-sectional shape of the housing body 11 may be, e.g., rectangular, polygonal, circular, oval, etc.

The housing cover 12 may be coupled to the housing body 11 and close the interior space of the housing body 11. As an example, the housing cover 12 may be formed to have a substantially plate-like shape and may be disposed to face the open side of the housing body 11. The housing cover 12 may be fixed to the housing body 11 by various types of coupling methods such as bolting, welding, fitting, and the like.

The battery 1 may function as a unit structure for storing and supplying power in the battery pack. A plurality of batteries 1 may be disposed inside the housing 10. The plurality of batteries 1 may be arranged in multiple rows in the housing 10. The plurality of batteries 1 may be connected in series and/or in parallel by an electrical connection device such as a busbar or the like.

Hereinafter, the battery 1 is described as an example of a prismatic lithium-ion secondary battery. However, the battery 1 may be a lithium polymer battery or a cylindrical battery.

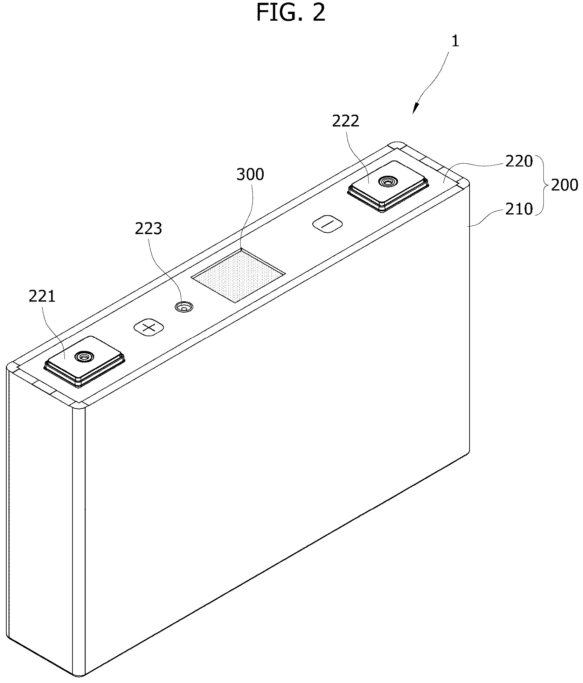

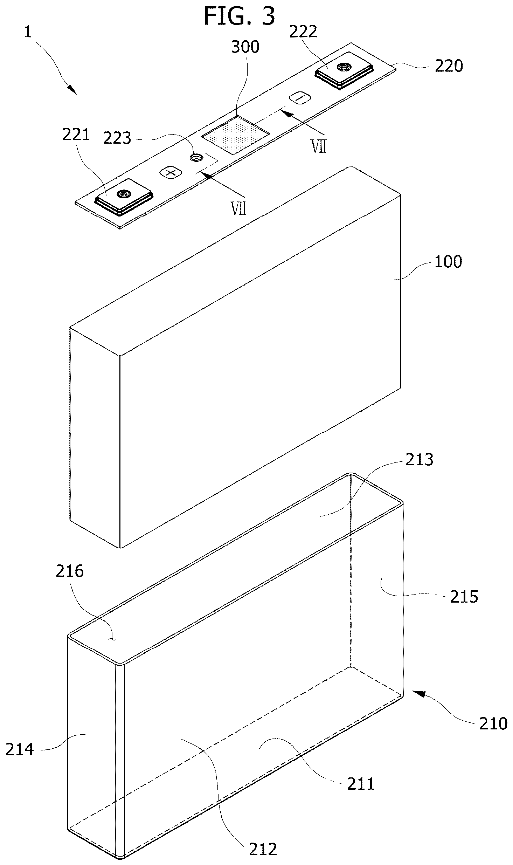

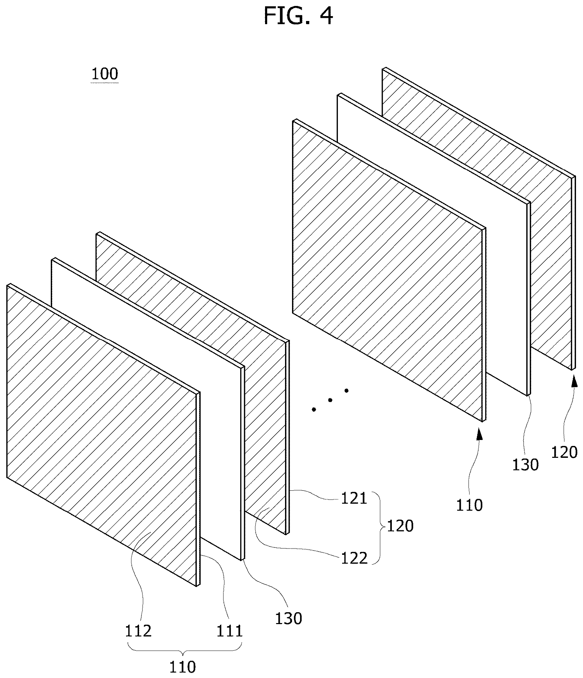

FIG. 2 is a perspective view schematically illustrating an example of a configuration of a battery included in the battery pack of FIG. 1. FIG. 3 is an exploded perspective view of the battery of FIG. 2. FIG. 4 is a view schematically illustrating an example of a configuration of an electrode assembly included in the battery of FIG. 2. Referring to FIGS. 2 to 4, the battery 1 includes an electrode assembly 100, a case 200, and a vent 300.

The electrode assembly 100 may function as a unit structure that performs charging and discharging operations of power in the battery 1. The electrode assembly 100 is accommodated inside the case 200. The electrode assembly 100 may include a first electrode 110, a second electrode 120, and a separator 130 disposed between the first electrode 110 and the second electrode 120. A plurality of first electrodes 110, separators 130, and second electrodes 120 may be provided.

Hereinafter, the electrode assembly 100 having a stacked form in which the plurality of first electrodes 110, separators 130, second electrodes 120, and separators 130 are sequentially stacked will be described as an example. However, the electrode assembly 100 may also be formed to have a form in which the first electrode 110, the separator 130, the second electrode 120, and another separator 130 are stacked and wound in a clockwise or counterclockwise direction around a winding axis.

The first electrode 110 may function as either a positive electrode or a negative electrode of the electrode assembly 100. Hereinafter, the first electrode 110 will be described as a positive electrode of the electrode assembly 100 as an example. However, the first electrode 110 may also function as a negative electrode of the electrode assembly 100.

The first electrode 110 may be formed to have the form of a foil including a metal material such as aluminum or an aluminum alloy. The first electrode 110 may have any suitable type, size, or shape as long as it is conductive and does not cause a chemical change in a secondary battery. A cross-sectional shape of the first electrode 110 may be designed to have various shapes other than the rectangular shape illustrated in FIG 4.

A plurality of first electrodes 110 may be provided. The plurality of first electrodes 110 may be arranged between a front surface portion 212 and a rear surface portion 213 of a can 210 described below. The number of first electrodes 110 may be designed to vary depending on the charging capacity of the battery 1 or the like.

The first electrode 110 may include a first substrate 111 and a first active material layer 112.

As the first electrode 110 functions as a positive electrode, the first substrate 111 may function as a positive electrode plate. The first substrate 111 may be formed to have the form of a foil including a metal material such as aluminum or an aluminum alloy. The first substrate 111 may have any suitable type, size, or shape as long as it is conductive and does not cause chemical change in the battery 1. A cross-sectional shape of the first substrate 111 may be designed to have various shapes other than the rectangular shape illustrated in FIG 4.

The first active material layer 112 may be formed on at least a portion of the first substrate 111. The first active material layer 112 may be formed on both surfaces of the first substrate 111, or alternatively, may be formed on only one surface of the first substrate 111. As the first electrode 110 functions as a positive electrode, the first active material layer 112 may include a positive electrode active material.

The positive electrode active material may be a compound capable of reversible intercalation and deintercalation of lithium (lithiated intercalation compound). More specifically, at least one of composite oxides of lithium and a metal selected from cobalt, manganese, nickel, iron, and combinations thereof may be used.

As an example, the positive electrode active material may include at least one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM). Here, 0 < x < 1, 0 < y < 1, 0 < z < 1, and x + y + z = 1 may be satisfied. The positive electrode active material may include only one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM), or may include two or all of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM).

The first active material layer 112 may further include a positive electrode conductive material. The positive electrode conductive material is used to impart conductivity to the first active material layer 112, and any material which does not cause a chemical change and is electronically conductive may be used. Examples of the positive electrode conductive material may include a carbon material such as natural graphite, artificial graphite, carbon black, acetylene black, Ketjen black, carbon fibers, carbon nanofibers, and carbon nanotubes, a metal material in the form of a metal powder or metal fiber containing copper, nickel, aluminum, silver, etc., a conductive polymer such as a polyphenylene derivative, or a mixture thereof.

The first active material layer 112 may further include a positive electrode binder. The positive electrode binder serves to attach the particles constituting the positive electrode active material to each other well, and also to attach the positive electrode active material to the first substrate 111 well. Examples of the positive electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, polyester resin, (meth)acrylic resin, phenolic resin, epoxy resin, polyvinyl alcohol, and a combination thereof.

When the aqueous binder is used as the positive electrode binder, a cellulose compound may be further contained to impart viscosity. This cellulose compound may be used by mixing one or more of carboxymethyl cellulose, hydroxypropyl methyl cellulose, methyl cellulose, and alkali metal salts thereof. Na, K, or Li may be used as the alkali metal.

The dry binder may be a polymeric material capable of being fiberized, for example, polytetrafluoroethylene, polyvinylidene fluoride, a polyvinylidene fluoride-hexafluoropropylene copolymer, polyethylene oxide, or a combination thereof.

The first electrode 110 may further include a first uncoated portion on which the first active material layer 112 is not formed. The first uncoated portion may be disposed in an upper end area of the first electrode 110, which is disposed toward an opening 216 inside the can 210 described below. However, the first uncoated portion may also be formed over an entire edge area of the first electrode 110.

The second electrode 120 may function as either a positive electrode or a negative electrode of the electrode assembly 100. Hereinafter, the second electrode 120 will be described as a negative electrode of the electrode assembly 100 as an example. However, the second electrode 120 may also function as a positive electrode of the electrode assembly 100.

A plurality of second electrodes 120 may be provided. The plurality of second electrodes 120 may be arranged between the front surface portion 212 and the rear surface portion 213 of the can 210 described below. The first electrode 110 and the second electrode 120 may be alternately disposed between the front surface portion 212 and the rear surface portion 213 of the can 210. The second electrode 120 may be disposed to be spaced at a predetermined distance apart from the first electrode 110.

The second electrode 120 may include a second substrate 121 and a second active material layer 122.

The second substrate 121 may be formed to have the form of a foil including a metal material such as copper, a copper alloy, nickel or a nickel alloy. The second substrate 121 may have any suitable type, size, or shape as long as it is conductive and does not cause a chemical change in the battery 1. A cross-sectional shape of the second substrate 121 may be designed to have various shapes other than the rectangular shape illustrated in FIG 4.

The second active material layer 122 may be formed on at least a portion of the second substrate 121. The second active material layer 122 may be formed on both surfaces of the second substrate 121, or alternatively, may be formed on only one surface of the second substrate 121. As the second electrode 120 functions as a negative electrode, the second active material layer 122 may include a negative electrode active material.

The negative electrode active material may include a material capable of reversibly intercalating and deintercalating lithium ions, lithium metal, an alloy of lithium and a metal, a material capable of doping and dedoping lithium, or a transition metal oxide.

The material capable of reversibly intercalating/deintercalating the lithium ion may include a carbon-based negative electrode active material, for example, crystalline carbon, amorphous carbon, or a combination thereof. Examples of the crystalline carbon may include graphite, such as natural graphite or artificial graphite in an amorphous, plate-like, flaky, spherical, or fibrous form, and examples of the amorphous carbon include soft carbon or hard carbon, mesophase pitch carbide, calcined coke, and the like.

An alloy of lithium and a metal selected from Na, K, Rb, Cs, Fr, Be, Mg, Ca, Sr, Si, Sb, Pb, In, Zn, Ba, Ra, Ge, Al, and Sn may be used as the alloy of lithium and a metal.

A Si-based negative electrode active material or Sn-based negative electrode active material may be used as the material capable of doping and dedoping the lithium. The Si-based negative electrode active material may include silicon, a silicon-carbon composite, SiOₓ (0 < x < 2), an Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, a Sn alloy, or a combination thereof.

The silicon-carbon composite may be a composite of silicon and amorphous carbon. According to an embodiment, the silicon-carbon composite may be in the form of silicon particles whose surfaces are coated with amorphous carbon. For example, the silicon-carbon composite may include a secondary particle (a core) in which silicon primary particles are assembled and an amorphous carbon coating layer (a shell) located on the surface of the secondary particle. The amorphous carbon may also be located between the silicon primary particles, and for example, the silicon primary particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles and an amorphous carbon coating layer located on a surface of the core.

The Si-based negative electrode active material or the Sn-based negative electrode active material may be used in combination with the carbon-based negative electrode active material.

The second active material layer 122 may further include a negative electrode conductive material and a negative electrode binder. A negative electrode conductive material is used to impart conductivity to the second active material layer 122, and any material which does not cause a chemical change and is electronically conductive may be used. Examples of the negative electrode conductive material may include a carbon material such as natural graphite, artificial graphite, carbon black, acetylene black, Ketjen black, carbon fibers, carbon nanofibers, and carbon nanotubes, a metal material in the form of a metal powder or metal fiber containing copper, nickel, aluminum, silver, etc., a conductive polymer such as a polyphenylene derivative, or a mixture thereof.

The negative electrode binder serves to attach the particles constituting the negative electrode active material to each other well, and also to attach the negative electrode active material to the second substrate 121 well. Examples of the negative electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, polyester resin, (meth)acrylic resin, phenolic resin, epoxy resin, polyvinyl alcohol, and a combination thereof.

When the aqueous binder is used as the negative electrode binder, a cellulose compound may be further contained to impart viscosity. This cellulose compound may be used by mixing one or more of carboxymethyl cellulose, hydroxypropyl methyl cellulose, methyl cellulose, and alkali metal salts thereof. Na, K, or Li may be used as the alkali metal.

The dry binder may be a polymeric material capable of being fiberized, for example, polytetrafluoroethylene, polyvinylidene fluoride, a polyvinylidene fluoride-hexafluoropropylene copolymer, polyethylene oxide, or a combination thereof.

The second electrode 120 may include a second uncoated portion on which the second active material layer 122 is not formed. The second uncoated portion may be disposed in an upper end area of the second electrode 120, which is disposed toward the opening 216 inside the can 210. However, the second uncoated portion may also be formed over an entire edge area of the second electrode 120.

The separator 130 may be disposed between the first electrode 110 and the second electrode 120. The separator 130 may perform the function of preventing a short circuit between the first electrode 110 and the second electrode 120 while allowing the movement of lithium ions between the first electrode 110 and the second electrode 120.

The separator 130 may be disposed to entirely cover a surface area of the electrode assembly 100. Accordingly, the separator 130 may prevent the first electrode 110 and the second electrode 120 from being directly exposed to the outside of the electrode assembly 100.

As the separator 130, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, or a polypropylene/polyethylene/polypropylene three-layer separator, or the like may also be used.

The separator 130 may include a porous substrate and a coating layer containing an organic material, an inorganic material, or a combination thereof located on one or both sides of the porous substrate.

The porous substrate may be a polymer film formed of any one polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, Teflon, and polytetrafluoroethylene, or a copolymer or mixture of two or more thereof.

The organic material may include a polyvinylidene fluoride polymer or a (meth)acryl-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof.

The organic material and the inorganic material may be present as a mixture in a single coating layer or may be present in a form in which a coating layer including an organic material and a coating layer including an inorganic material are stacked.

The case 200 forms an approximate exterior of the battery 1 and accommodates the electrode assembly 100 therein. The case 200 may include the can 210 and a cap plate 220.

The can 210 may form an approximate exterior of the case 200, and the electrode assembly 100 may be disposed therein. The can 210 may include a bottom portion 211, the front surface portion 212, the rear surface portion 213, a first side portion 214, and a second side portion 215.

The bottom portion 211 may form an exterior of a lower side (based on FIG. 3) of the case 200. The bottom portion 211 may have the form of a rectangular plate. The bottom portion 211 may be seated on a bottom surface of the housing body 11.

The front surface portion 212, the rear surface portion 213, the first side portion 214, and the second side portion 215 may form an exterior of an outer surface of the case 200. The front surface portion 212, the rear surface portion 213, the first side portion 214, and the second side portion 215 may have the form of a plate extending upward (based on FIG. 3) from an edge of the bottom portion 211. The front surface portion 212, the rear surface portion 213, the first side portion 214, and the second side portion 215 may be disposed to surround the space above the bottom portion 211. The front surface portion 212, the rear surface portion 213, the first side portion 214, and the second side portion 215 may be disposed to form a rectangular cross-sectional shape.

The front surface portion 212 and the rear surface portion 213 may be disposed to face each other in a longitudinal direction of the housing 10. The front surface portion 212 and the rear surface portion 213 may be disposed parallel to each other. Areas of the front surface portion 212 and the rear surface portion 213 may be the same.

The first side portion 214 and the second side portion 215 may be disposed to face each other in a width direction of the housing 10. The first side portion 214 and the second side portion 215 may be disposed parallel to each other. Areas of the first side portion 214 and the second side portion 215 may be the same. An area of each of the first side portion 214 and the second side portion 215 may be smaller than the area of the front surface portion 212 or the rear surface portion 213.

The can 210 may be provided with the opening 216. The opening 216 may refer to a space surrounded by upper end portions of the front surface portion 212, the rear surface portion 213, the first side portion 214, and the second side portion 215. The opening 216 may interconnect the space inside and outside the can 210. Accordingly, the can 210 may have a shape of a rectangular parallelepiped with an open upper side.

The cap plate 220 may be coupled to the can 210 and seal the can 210. The cap plate 220 may be formed to have the form of a flat plate. The cap plate 220 may be disposed in the opening 216 of the can 210 and cover the opening 216. That is, the cap plate 220 may be seated on an upper end portion of the can 210, e.g., on the upper end portions of the front surface portion 212, the rear surface portion 213, the first side portion 214, and the second side portion 215. The cap plate 220 may be disposed parallel to the bottom portion 211 of the can 210. The cap plate 220 may be coupled to the can 210 by welding. A welded portion may be formed between the can 210 and the cap plate 220.

The cap plate 220 may include a first terminal 221 and a second terminal 222. The cap plate 220 may support the first terminal 221 and the second terminal 222 as a whole.

The first terminal 221 may protrude outward from the cap plate 220. The first terminal 221 may be electrically connected to the first electrode 110. When the first electrode 110 functions as a positive electrode, the first terminal 221 may function as a positive electrode terminal of the battery 1.

The first terminal 221 may be inserted into the inside of the cap plate 220. In this case, an upper end portion of the first terminal 221 may protrude from the cap plate 220. In FIG. 3, the first terminal 221 is illustrated as having a rectangular cross-sectional shape as an example, but a cross-sectional shape of the first terminal 221 may have various shapes such as a circular shape, an oval shape, a polygonal shape, and the like. The first terminal 221 may be formed of an electrically conductive material such as aluminum, nickel, copper, and the like.

The second terminal 222 may protrude outward from the cap plate 220 at a position spaced apart from the first terminal 221. The second terminal 222 may be electrically connected to the second electrode 120. When the second electrode 120 functions as a negative electrode, the second terminal 222 may function as a negative electrode terminal of the battery 1.

The second terminal 222 may be inserted into the inside of the cap plate 220. In this case, an upper end portion of the second terminal 222 may protrude from the cap plate 220. In FIG. 3, the second terminal 222 is illustrated as having a rectangular cross-sectional shape as an example, but a cross-sectional shape of the second terminal 222 may have various shapes such as a circular shape, an oval shape, a polygonal shape, and the like. The second terminal 222 may be formed of an electrically conductive material such as aluminum, nickel, copper, and the like.

The cap plate 220 may further include an electrolyte inlet 223. The electrolyte inlet 223 is formed to pass through the cap plate 220 and a sealing plug may be installed therein. The electrolyte inlet 223 may be disposed between the first terminal 221 and the second terminal 222.

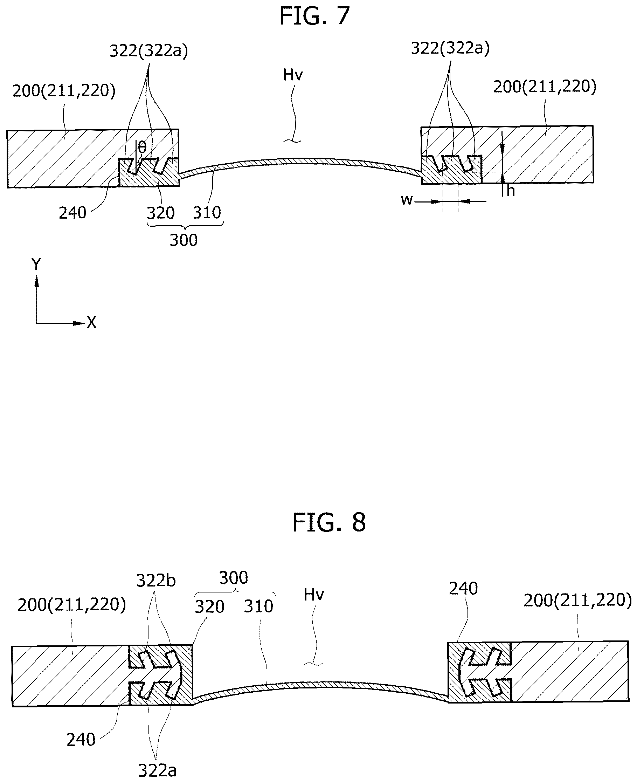

The cap plate 220 may further include a vent 300. Accordingly, the cap plate 220 may be formed with a vent hole Hv (FIG. 7). The vent hole Hv may have the form of a hole that passes through both surfaces of the cap plate 220 in a vertical direction. The vent hole Hv may function as a configuration that provides a path for flames, gas, smoke, or the like formed inside the case 200 to be discharged to the outside of the case 200 when thermal runaway of the battery 1 occurs due to overcurrent, or the like. The vent hole Hv may be disposed between the first terminal 221 and the second terminal 222. A planar shape of the vent hole Hv may be designed to have various shapes such as an oval, a circle, and a polygon.

The cap plate 220 may be provided with the vent 300 covering (e.g., completely covering and overlapping) at least the vent hole Hv. The vent 300 has a body portion 310 (FIG. 7) covering (e.g., fitting in) the vent hole Hv and a flange portion 320 (FIG. 7) coupled to the cap plate 220. Accordingly, the vent 300 may keep the vent hole Hv closed during normal operation of the battery 1, thereby preventing the electrolyte or the like inside the case 200 from leaking out of the case 200 or moisture, foreign substances or the like from entering the case 200. The specific form in which the flange portion 320 of the vent 300 is coupled to the cap plate 220 will be described below.

Additionally, the body portion 310 of the vent 300 may break when the internal pressure of the case 200 rises above a predetermined pressure, thereby causing flames, gas, smoke, or the like formed inside the case 200 to be discharged to the outside of the case 200 through the vent hole Hv of the cap plate 220.

In addition, the body portion 310 of the vent 300 may lose its properties and break due to elongation even when the temperature inside or around the case 200 rises above a predetermined temperature, thereby causing flames, gas, smoke, or the like formed inside the case 200 to be discharged to the outside of the case 200 through the vent hole Hv of the cap plate 220. Accordingly, the vent 300 is formed of a polymer material, which will be described in detail below.

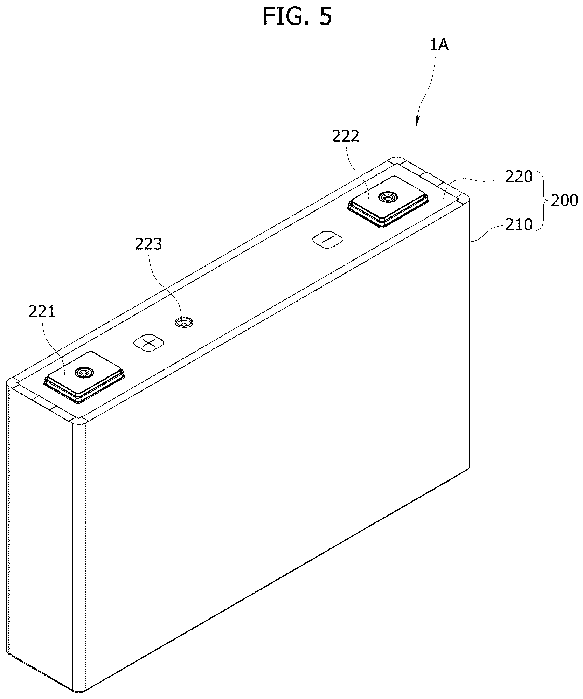

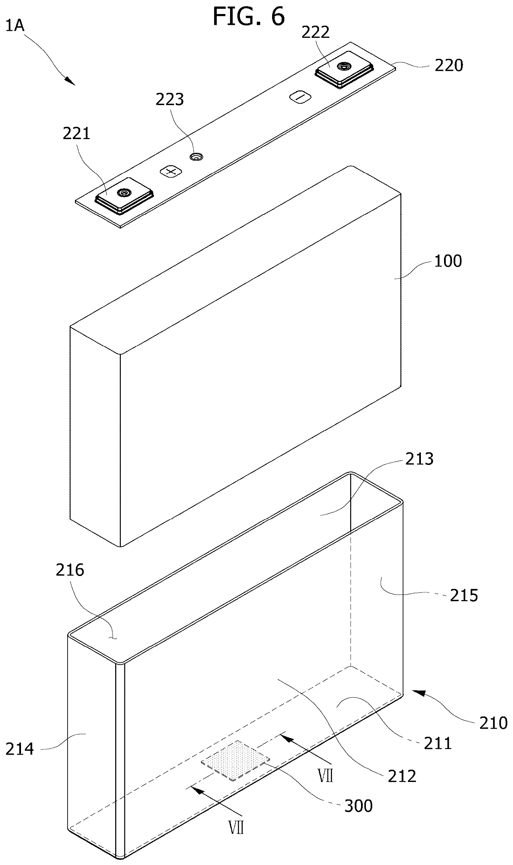

FIG. 5 is a perspective view schematically illustrating another example of a configuration of a battery that may be included in the battery pack of FIG. 1. FIG. 6 is an exploded perspective view of the battery of FIG. 5. Referring to FIGS. 5 and 6, a battery 1A includes the electrode assembly 100, the case 200, and the vent 300.

The battery 1A illustrated in FIGS. 5 and 6 differs from the battery 1 illustrated in FIGS. 1 to 3 in that the vent 300 is provided in a can 210 of the case 200. Thus, hereinafter, the battery 1A will be described mainly with respect to the differences from the battery 1 disclosed in FIGS. 1 to 4. Thus, matters not specifically described herein may be equally applied to the battery 1 described above with reference to FIGS. 1 to 4.

According to the present embodiment, the vent 300 may be installed in the can 210 rather than the cap plate 220 (FIG. 6). For example, the vent 300 may be installed in the bottom portion 211 of the can 210. Accordingly, the can 210, for example, the bottom portion 211, may have the vent hole Hv (FIG. 7) formed therein. The vent hole Hv may have the form of a hole that passes through both sides of the bottom portion 211 in a vertical direction. The vent hole Hv may function as a configuration that provides a path for flames, gas, smoke, or the like formed inside the case 200 to be discharged to the outside of the case 200 when thermal runaway of the battery of 1A occurs due to overcurrent or the like. A planar shape of the vent hole Hv may be designed to have various shapes such as an oval, a circle, and a polygon.

The bottom portion 211 of the can 210 may be provided with the vent 300 covering at least the vent hole Hv. The vent 300 may have the body portion 310 (FIG. 7) covering the vent hole Hv and the flange portion 320 (FIG. 7) coupled to the bottom portion 211. Accordingly, the vent 300 may keep the vent hole Hv closed during normal operation of the battery 1A, thereby preventing the electrolyte or the like inside the case 200 from leaking out of the case 200 or moisture, foreign substances or the like from entering the case 200. The specific form in which the vent 300 is coupled to the bottom portion 211 will be described below.

Additionally, the body portion 310 of the vent 300 may break when the internal pressure of the case 200 rises above a predetermined pressure, thereby causing flames, gas, smoke, or the like formed inside the case 200 to be discharged to the outside of the case 200 through the vent hole Hv of the bottom portion 211.

In addition, the body portion 310 of the vent 300 may lose its properties and break due to elongation even when the temperature inside or around the case 200 rises above a predetermined temperature, thereby causing flames, gas, smoke, or the like formed inside the case 200 to be discharged to the outside of the case 200 through the vent hole Hv of the bottom portion 211.

FIG. 7 is an example of a cross-sectional view along line VII-VII in FIG. 3 or 6. Referring to FIG. 7, the vent 300 includes the body portion 310 and the flange portion 320. The vent 300 may be coupled to the case 200, e.g., to the cap plate 220 or the bottom portion 211 of the can 210, by the flange portion 320. Hereinafter, the cap plate 220 in FIG. 3 or the bottom portion 211 of the can in FIG. 6 may be simply referred to as the case 210.

As described above, the vent 300 may be provided to seal the vent hole Hv of the case 200. For example, the vent 300 may have the body portion 310 covering the vent hole Hv and the flange portion 320 coupled to the case 200. In this case, the flange portion 320 may have a structure that extends outward from the body portion 310 toward a surface of the case 200 (e.g., along a horizontal direction in FIG. 7) and is coupled to the case 200. Accordingly, during normal operation of the battery, the vent 300 may remain in a state in which the body portion 310 closes the vent hole Hv while being coupled to the case 200 through the flange portion 320.

The body portion 310 may be a plate-shaped member having a predetermined thickness and size. For example, as illustrated in FIG. 7, the body portion 310 may have a convex shape toward the outside of the case 200 (e.g., curving away from an interior of the case 200 toward the outside of the case 200) so as to face the outside of the vent hole Hv. In another example, the body portion 310 may have a flat-plate shape parallel to a bottom surface (i.e., the bottom portion 211) of the case 200. However, in this case (i.e., when the body portion 310 has a flat-plate shape), as the internal pressure of the case 200 increases, the body portion 310 may also be deformed into a convex shape toward the outside of the case 200, as illustrated in FIG. 7.

The body portion 310 of the vent 300 may break and the vent hole Hv may be opened when the internal pressure of the case 200 rises above a predetermined pressure. That is, the body portion 310 of the vent 300 may break when the internal pressure of the case 200 exceeds a predetermined reference value. Accordingly, the body portion 310 of the vent 300 may break when the internal pressure of the case 200 rises above a predetermined pressure, thereby causing flames, gas, smoke, or the like formed inside the case 200 to be discharged to the outside of the case 200 through the vent hole Hv. The internal pressure at which the vent 300 breaks may be controlled by the size or thickness of the body portion 310.

The vent 300 may also be configured such that the body portion 310 loses its properties and breaks due to elongation even when the temperature inside or around the battery rises above a predetermined temperature. Accordingly, the vent 300 is formed of a polymer material. When the vent 300 is formed of a polymer material, when the surrounding temperature rises to a high temperature, the vent 300 (i.e., the body portion 310) may be vitrified in a solid state, thereby opening the vent hole Hv. Accordingly, even when the temperature around the battery rises due to thermal runaway of an adjacent battery, the vent 300 may prevent additional battery fires or explosions by discharging gas and heat from the inside of the battery to the outside through the vent hole Hv as the body portion 310 breaks.

The polymer material of the vent 300 may be appropriately selected by considering the safety of the battery provided with the vent 300. More specifically, the type of polymer material may be selected by considering a temperature at which the body portion 310 of the vent 300 breaks, i.e., a glass transition temperature at which the polymer material becomes vitrified. Considering the stability of the battery, the polymer material forming the vent 300 may have a glass transition temperature in the range of 80 °C to 340 °C measured according to ISO 6721-11:2019. For example, the polymer material may be at least one selected from the group consisting of polyphenylene sulfide (PPS) having a glass transition temperature in the range of 88 °C to 93 °C, perfluoroalkoxy alkane (PFA) having a glass transition temperature in the range of 90 °C to 100 °C, polycarbonate (PC) having a glass transition temperature in the range of 150 °C to 160 °C, and polyimide (PI) having a glass transition temperature in the range of 250 °C to 340 °C.

The vent 300 is coupled to the case 200 (i.e., to the cap plate 220 or to the bottom portion 211) through the flange portion 320. The case 200, which is formed of a metal material such as aluminum, and the vent 300, which is formed of a polymer material, may be coupled using, for example, an insert injection molding method. Accordingly, the bonding strength between the flange portion 320 and the case 200, which are dissimilar materials, may be improved.

To further improve the bonding strength between the flange portion 320 and the case 200, the flange portion 320 includes a protrusion 322 protruding in a thickness direction (e.g., along the Y-axis in a vertical direction in FIG. 7) of a portion of the case 200 coupled to the flange portion 320. Even when the body portion 310 expands and tension is applied to the flange portion 320 toward the center of the vent hole Hv (i.e., along the X-axis in a horizontal direction in FIG. 7), the flange portion 320 may be prevented from being separated from the case 200 by the protrusion 322 protruding in the thickness direction of a portion of the case 200 coupled to the flange portion 320. The shape of the protrusion 322 corresponds to a recess within the surface of the case 200. When the vent 300 is installed, the protrusion 322 completely or almost completely (for example, 95% of the volume of the recess) fills the recess in the surface.

One or more protrusions 322 may be provided. For example, when only one protrusion 322 is provided, the one protrusion 322 may be disposed so that at least one surface thereof is not exposed to the vent hole Hv (e.g., the entire protrusion 322 may be located inside the case 200 and completely surrounded by the cap plate 220 or the bottom portion 211 of the case 200). In another example, when a plurality of protrusions 322 is provided, as illustrated in FIG. 7, one of the plurality of protrusions 322 may be disposed such that one surface thereof is exposed to the vent hole Hv, while the remaining protrusions 322 may be disposed to be completely located inside (e.g., surrounded by) the case 200. In an example, the body portion 310, the at least one protrusion 322 and a portion of the flange portion 320 except for the at least one protrusion 322 may include the same polymer material, and the flange portion 320 with the at least one protrusion 322 may be within a portion of the case 200.

The protrusion 322 may have a predetermined height h and width w, which may effectively prevent the flange portion 320 from being separated from the case 200. Here, the height h may be measured from a valley between protrusions 322 and the width w may refer to a width of a single protrusion 322. For example, a height h of the protrusion 322 along the thickness direction of a portion of the case 200 coupled to the flange portion 320 (e.g., along the Y-axis in FIG. 7) may be in the range of 1/10 to 1/3 of a thickness of the case 200. The thickness of the case 200 (i.e., the thickness of the cap plate 220 or the bottom portion 211 of the case 200 along the Y-axis in FIG. 7) may be, for example, 0.4 mm to 5 mm. When the height h of the protrusion 322 is less than 1/10 of the thickness of the case 200, it may be difficult to prevent the flange portion 320 from being separated from the case 200. On the other hand, when the height h of the protrusion 322 is greater than 1/3 of the thickness of the case 200, the amount of forging may be excessive, thereby making the manufacturing process difficult.

In addition, a width w of the protrusion 322 (e.g., along the X-axis in FIG. 7) may be in the range of 1/5 to 1 of the height h of the protrusion 322 (e.g., along the Y-axis in FIG. 7). When the width w of the protrusion 322 is less than 1/5 of the height h of the protrusion 322, it may be difficult to manufacture the protrusion 322 into a desired shape using a forging process. On the other hand, when the width w of the protrusion 322 is greater than the height h of the protrusion 322, the effect of preventing the flange portion 320 to be separated from the case 200 may be halved. In addition, as will be described below, when the protrusion 322 is inclined at a predetermined angle with respect to an extension direction of the flange portion 320 (i.e., in the horizontal direction in FIG. 7 along the X-axis), the effect of the protrusion 322 in preventing the flange portion 320 from being separated from the case 200 may be further reduced when the width w of the protrusion 322 is greater than the height h of the protrusion 322.

The protrusion 322 may also be inclined and protrude at a predetermined angle θ in a direction of (e.g., inclined toward) the vent hole Hv. Accordingly, even when the body portion 310 expands and tension is applied to the flange portion 320 toward the center of the vent hole Hv, the flange portion 320 may be more effectively prevented from being separated from the case 200. In addition, even when the flange portion 320 swells upward due to an increase in temperature inside and around the battery, the bonding strength of the flange portion 320, i.e., the protrusion 322 and the case 200, may be further enhanced. This is because the protrusion 322, which is inclined at a predetermined angle, has a portion of its side surface that faces an inner surface of the case 200 at a predetermined angle rather than vertically, thereby allowing a larger contact area. In other words, the inner and/or outer surface of the case 200 has inclined recesses at a predetermined angle. The corresponding protrusions 322 fit inside them.

The predetermined angle θ at which the protrusion 322 is inclined in the direction of the vent hole Hv may be 45° or less, e.g., in the range of 5 to 30°. When the predetermined angle θ is less than 5°, a basic function of the protrusion 322 (i.e., preventing the vent 300 from falling out when the body portion 310 expands) may not be performed. On the other hand, when the predetermined angle θ is greater than 30°, processing may be difficult.

The protrusion 322 may include an outward protrusion 322a protruding toward an outer surface (upward direction in FIG. 7) of the case 200. By including the outward protrusion 322a in the protrusion 322, even when the outward protrusion 322a, which is a polymer material, expands and swells due to an increase in temperature inside or around the case 200, bonding strength may be enhanced by coming into close contact with the case 200.

To improve the bonding strength and sealing performance between the flange portion 320 and the case 200, the surface of the case 200 in contact with the flange portion 320 may be acid-treated or laser-treated. That is, the interface of the case 200 in contact with the flange portion 320 may include a surface treatment layer 240 that is acid-treated or laser-treated. By acid-treating or laser-treating the case 200 of the metal material, pores may be formed on the surface of the case 200. In addition, by press-molding the flange portion 320 made of a polymer material, the bonding strength and sealing performance between the flange portion 320 and the case 200 may be further enhanced.

FIG. 8 is a schematic cross-sectional view illustrating another example of a combined form of the case and the vent. The cross-sectional view illustrated in FIG. 8 corresponds to the cross-sectional view illustrated in FIG. 7. That is, the cross-sectional view illustrated in FIG. 8 is another example of the cross-sectional view along line VII-VII in FIG. 3 or 6. Hereinafter, the differences relative to the cross-sectional view illustrated in FIG. 7 will be described. Thus, matters not described in detail herein may be equally applied to matters described with reference to FIG. 7.

Referring to FIG. 8, the vent 300 includes the body portion 310 and the flange portion 320. In addition, the vent 300 is coupled to the case 200 by the flange portion 320. That is, the vent 300 may have the body portion 310 covering the vent hole Hv and the flange portion 320 coupled to the case 200.

The body portion 310 may be a plate-shaped member having a predetermined thickness and size. For example, as illustrated in FIG. 8, the body portion 310 may have a convex shape toward the outside of the case 200 so as to face the outside of the vent hole Hv. For example, as illustrated in FIG. 8, the body portion 310 may be located at a position adjacent to the inner surface of the case 200, i.e., at an inner surface of the battery. In another example, the body portion 310 may be located at a position adjacent to the outer surface of the case 200, i.e., at an outer surface of the battery, or may be located at a central portion between the inner surface and the outer surface of the case 200.

To improve the bonding strength between the flange portion 320 and the case 200, the flange portion 320 may include the protrusion 322 protruding in the thickness direction (a vertical direction in FIG. 8) of a portion of the case 200 coupled to the flange portion 320. In this way, even when the body portion 310 expands and tension is applied to the flange portion 320 toward the center of the vent hole Hv (i.e., in the horizontal direction in FIG. 8), the flange portion 320 may be prevented from being separated from the case 200 by the protrusion 322 protruding in the thickness direction of a portion of the case 200 coupled to the flange portion 320. In addition, the protrusion 322 may be inclined at a predetermined angle in the direction of the vent hole Hv with respect to the extension direction of the flange portion 320.

The protrusion 322 may include an outward protrusion 322a protruding toward the outer surface of the case 200. In addition, the protrusion 322 may further include an inward protrusion 322b protruding toward the inner surface of the case 200. By including the inward protrusion 322b together with the outward protrusion 322a in the protrusion 322, even when the outward protrusion 322a and the inward protrusion 322b, which are polymer materials, expand due to an increase in temperature inside or around the case 200, the bonding strength may be enhanced by coming into close contact with the case 200.

By way of summation and review, the battery has a sealed structure to prevent moisture and other substances from penetrating from the outside. However, as the battery is repeatedly charged and discharged, various gases are generated therein, thereby resulting in a continuous increase in the internal pressure of the sealed battery. To prevent an explosion or fire in the battery due to an increase in internal pressure, the battery is usually equipped with a vent. When the internal pressure of the battery increases above a predetermined pressure, the vent opens to discharge the gas inside the battery to the outside.

The present disclosure is directed to providing a battery having improved stability by improving a material and structure of a vent and a battery pack including the same. That is, according to an embodiment of the present disclosure as describe above, by forming a vent with a polymer material and also using a flange portion with a protrusion to be connected to a case of a battery, the vent can be opened not only under high pressure inside the battery but also under a high temperature environment around the battery, and the bonding strength of the vent to the case can be increased, thereby improving the stability of the battery.

## Claims

1. A battery (1, 1A), comprising:
an electrode assembly (100);
a case (200) accommodating the electrode assembly (100), the case (200) including a vent hole; and
a vent (300) formed of a polymer material, the vent (300) including:
a body portion (310) covering the vent hole, and
a flange portion (320) extending from the body portion (310) toward a surface of the case (200), the flange portion (320) being coupled to the case (200) and including at least one protrusion (322) protruding in a thickness direction of a portion of the case (200) coupled to the flange portion (320).

2. The battery (1, 1A) as claimed in claim 1, wherein the at least one protrusion (322) is inclined at a predetermined angle in a direction of the vent hole.

3. The battery (1, 1A) as claimed in claim 2, wherein the predetermined angle is in a range of 5° to 30°.

4. The battery (1, 1A) as claimed in any one of the preceding claims, wherein the at least one protrusion (322) includes an outward protrusion (322a) protruding toward an outer surface of the case (200).

5. The battery (1, 1A) as claimed in claim 4, wherein the at least one protrusion (322) further includes an inward protrusion (322b) protruding toward an inner surface of the case (200).

6. The battery (1, 1A) as claimed in any one of the preceding claims, wherein the case (200) includes a surface treatment layer (240) that is acid-treated or laser-treated at an interface that comes into contact with the flange portion (320).

7. The battery (1) as claimed in any one of the preceding claims, wherein:
the case (200) includes a can (210) accommodating the electrode assembly (100) and a cap plate (220) coupled to the can (210) and covering an opening (216) in the can (210); and
the vent (300) is in the cap plate (220) or the can (210).

8. The battery (1, 1A) as claimed in any one of the preceding claims, wherein the polymer material has a glass transition temperature in a range of 80 °C to 340 °C measured according to ISO 6721-11:2019.

9. The battery (1, 1A) as claimed in claim 8, wherein the polymer material is at least one selected from the group consisting of polyphenylene sulfide (PPS) having a glass transition temperature in the range of 88 °C to 93 °C, perfluoroalkoxy alkane (PFA) having a glass transition temperature in the range of 90 °C to 100 °C, polycarbonate (PC) having a glass transition temperature in the range of 150 °C to 160 °C, and polyimide (PI) having a glass transition temperature in the range of 250 °C to 340 °C.

10. The battery (1, 1A) as claimed in any one of the preceding claims, wherein a height of the at least one protrusion (322) is 1/10 to 1/3 of a thickness of the case (200).

11. The battery (1, 1A) as claimed in any one of the preceding claims, wherein a width of the at least one protrusion (322) is 1/5 to 1 of the height of the at least one protrusion (322).

12. The battery (1, 1A) as claimed in any one of the preceding claims, wherein the body portion (310) and the flange portion (320) are molded from the same polymer material.

13. A battery (1, 1A) pack, comprising:
a housing (10); and
a plurality of batteries inside the housing (10), each of the plurality of batteries comprises the battery (1, 1A) according to any one of claims 1 to 12.
